**Europäisches Patentamt**

**European Patent Office**

**Office européen des brevets**

(19)

(11) Veröffentlichungsnummer: **0 006 219**
**B1**

(12) **EUROPÄISCHE PATENTSCHRIFT**

(45) Veröffentlichungstag der Patentschrift:
**12.05.82**

(21) Anmeldenummer: **79101913.6**

(22) Anmeldetag: **12.06.79**

(51) Int. Cl.³: **F 24 J 3/00**

(54) **Verfahren und Vorrichtung zur Speicherung von Wärmeenergie.**

(30) Priorität: **14.06.78 DE 2826058**

(43) Veröffentlichungstag der Anmeldung:
**09.01.80 Patentblatt 80/1**

(45) Bekanntmachung des Hinweises auf die Patenterteilung:
**12.05.82 Patentblatt 82/19**

(84) Benannte Vertragsstaaten:
**AT BE CH FR GB IT LU NL SE**

(56) Entgegenhaltungen:
**AT-B-332 047**
**CH-A-504 657**
**US-A-4 117 882**

(73) Patentinhaber: **Mutti, Werner H., Dipl.-Ing.,
Rigistrasse 16, CH-5033 Buchs (CH)**

(72) Erfinder: **Mutti, Werner H., Dipl.-Ing., Rigistrasse 16,
CH-5033 Buchs (CH)**

(74) Vertreter: **Patentanwälte Dipl.-Ing. A. Grünecker,
Dr.-Ing. H. Kinkeldey, Dr.-Ing. W. Stockmair,, Dr. rer. nat.
K. Schumann, Dipl.-Ing. P.H. Jakob, Dr. rer. nat. G.
Bezold Maximilianstrasse 43, D-8000 München 22 (DE)**

## Verfahren und Vorrichtung zur Speicherung von Wärmeenergie

Die Erfindung betrifft ein Verfahren zur Speicherung von Wärme, bei dem durch Zufuhr von Schmelzwärme ein gefrorenes Speichermedium in den flüssigen Zustand übergeführt und durch eine wärmeaufnehmende Trägerflüssigkeit nach Belieben Wärme abgeführt wird, indem die wärmeaufnehmende Trägerflüssigkeit in gewünschter Menge eine in das geschmolzene Speichermedium eingetauchte Wärmeübertragungsvorrichtung durchfließt und dabei das geschmolzene Speichermedium an den Wänden der Wärmeübertragungsvorrichtung erstarren läßt, sowie eine Vorrichtung zur Durchführung des Verfahrens mit einem Behälter zur Aufnahme eines Speichermediums, in dem eine in das Speichermedium eingetauchte Wärmeübertragungsvorrichtung angeordnet ist, welche einen Zulauf und einen Ablauf für die wärmeaufnehmende Trägerflüssigkeit aufweist und welcher eine Abschabeeinrichtung zugeordnet ist, durch die gefrorenes Speichermedium von der Außenfläche der Wärmeübertragungsvorrichtung abtrennbar ist.

Aus der AT-B-332 047 ist ein Wärmespeicher mit einem Speichermedium bekannt, bei dem dem Speichermedium entweder nur eine Wärmemenge zugeführt oder lediglich eine Wärmemenge entnommen werden kann, da nur ein einziger Wärmetauscher vorgesehen ist, der entweder von einem erwärmten Medium zum Schmelzen der Kristalle des Speichermediums oder von einem kühlen Medium zum Abführen einer Wärmemenge und damit zum Erwärmen des kühlen Mediums durchflossen werden kann. Wenn beispielsweise eine Wärmemenge vorhanden ist, die gespeichert werden könnte, jedoch gerade dieser Wärmespeicher eingesetzt wird, um das ihn durchfließende Medium zu erwärmen, so ist es nicht üblich, diese Wärmemenge zu speichern.

In der CH-A-504 657 ist eine Vorrichtung zur Erzeugung von Eis dargestellt und beschrieben. Diese Vorrichtung umfaßt im wesentlichen eine horizontale, drehbare, von innen her gekühlte Trommel, die in einen eine zu gefrierende Flüssigkeit enthaltenden Behälter eintaucht. Eine Schabeeinrichtung ist von außen gegen den Trommelmantel gerichtet, um die sich auf dem Trommelmantel bildende Eisschicht abzutrennen. In dem Trommelmantel ist eine schraubenlinienförmige Führung vorgesehen, durch welche ein Kältemittel fließen kann.

Der Erfindung liegt die Aufgabe zugrunde, ein Verfahren und eine Vorrichtung der eingangs genannten Art derart weiterzubilden, daß dem Speichermedium unabhängig voneinander Wärme zugeführt oder entnommen werden kann.

Diese Aufgabe wird im Hinblick auf das Verfahren dadurch gelöst, daß die Schmelzwärme von einer wärmeabgebenden Trägerflüssigkeit durch Wärmeübertragung dem gefrorenen Speichermedium zugeführt wird, daß die Wärmeübertragungsvorrichtung eine an sich bekannte, zum Teil mit ihrem Umfang in das geschmolzene Speichermedium eingetauchte, sich drehende, mit ihrer Drehachse waagerecht angeordnete Kristallisationswalze ist und daß das an den Wänden der Walze gefrorene Speichermedium durch die Drehbewegung der Walze der wärmeabgebenden Trägerflüssigkeit zugeführt wird.

Bei der großtechnischen Anwendung der Schmelzwärmespeicherung besteht ein Hindernis in dem Kristallisationsverzug, bei dem sich der Kristallisationsbeginn um mehrere Grad Celsius verschieben kann. Bei dem erfindungsgemäßen Verfahren wird dieses Problem dadurch gelöst, daß die Keimstellen für eine Kristallisation durch eine kontinuierliche, mechanische Einwirkung erzeugt werden. Diese mechanische Erzeugung der Keimstellen wird durch die sich in dem geschmolzenen Speichermedium drehende Kristallisationswalze bewirkt.

In vorteilhafter Weise wird bei dem erfindungsgemäßen Verfahren die Schmelzwärme zur Änderung des Aggregatzustandes des Speichermediums mittels einer wärmeabgebenden Trägerflüssigkeit durch Wärmeübertragung dem gefrorenen Speichermedium zugeführt. Diese Zufuhr einer Wärmemenge durch die wärmeabgebende Trägerflüssigkeit ist unabhängig von der Entnahme einer Wärmemenge mittels der wärmeaufnehmenden Trägerflüssigkeit. Infolgedessen ist es möglich, unabhängig davon, ob gerade durch die wärmeaufnehmende Trägerflüssigkeit dem Speichermedium eine Wärmemenge entnommen wird, dem Speichermedium über die wärmeaufnehmende Trägerflüssigkeit eine Wärmemenge zuzuführen. Dies spielt beispielsweise eine bedeutende Rolle, wenn mit Hilfe von Sonnenkollektoren die Sonnenenergie ausgenutzt werden soll. Gerade in den nördlichen geographischen Breiten ist es von großer Bedeutung, einen möglichst großen Anteil der eingestrahlten Sonnenenergie zu speichern. Da bei teilweise bedecktem Himmel die Sonneneinstrahlung nur während kürzerer Zeitintervalle die Sonnenkollektoren erreicht, sollte eine Speichereinrichtung fortlaufend in der Lage sein, die Energie zu speichern, unabhängig davon, ob dieser Speichereinrichtung gerade Wärme entnommen wird oder nicht.

In besonders vorteilhafter Weise wird bei dem erfindungsgemäßen Verfahren die Drehung der Kristallisationswalze ausgenutzt, um dadurch ohne weitere Fördermittel das gefrorene Speichermedium zum Zwecke des Wärmeaustausches mit der wärmeabgebenden Trägerflüssigkeit in Kontakt zu bringen. Dies geschieht dadurch, daß das an der Mantelfläche der Kristallisationswalze gefrorene Speichermedium kontinuierlich über den Oberflächenspiegel des Speichermediums herausgetragen wird.

Im Hinblick auf die Vorrichtung wird die genannte Aufgabe erfindungsgemäß dadurch gelöst, daß die die Wärmeübertragungsvorrichtung bildende, teilweise in das Speichermedium eintauchende Kristallisationswalze um ihre waagerecht angeordnete Drehachse antreibbar in dem Behälter gelagert ist, daß der Zulauf und der Ablauf für die wärmeaufnehmende Trägerflüssigkeit in das Innere der Kristallisationswalze münden, daß für die wärmeabgebende Trägerflüssigkeit Zu- und Ablaufleitungen vorhanden sind, die zu einem im Behälter angeordneten Wärmetauscher führen, der zur Aufnahme des von der Walze bei ihrer Drehung angelieferten, gefrorenen Speichermediums geeignet ist, und dem die Abschabeeinrichtung zum Überführen des von der Kristallisationswalze angelieferten gefrorenen Speichermediums vorgelagert ist.

Die vorhergehend im Zusammenhang mit dem erfindungsgemäßen Verfahren genannten und durch dieses erzielten Vorteile treffen auch bei der erfindungsgemäßen Vorrichtung zu.

Der vorgesehene Wärmeaustauscher, durch den dem Speichermedium eine Wärmemenge zugeführt wird, kann von einer wärmeabgebenden Trägerflüssigkeit durchflossen werden, die nicht notwendigerweise mit der wärmeaufnehmenden Trägerflüssigkeit identisch zu sein braucht. Als Speichermedium eignet sich jeder Stoff, der seine Phasenumwandlung vom festen in den flüssigen Zustand in dem Bereich der gewünschten Speichertemperatur hat.

Die wärmeaufnehmende Trägerflüssigkeit wird über einen Zulauf in das Walzeninnere geleitet und dort erwärmt. Über einen Ablauf kann die wärmeaufnehmende Trägerflüssigkeit nach der Energieaufnahme abgepumpt oder abgesaugt werden. Das Zu- und Abführen der wärmeaufnehmenden Trägerflüssigkeit zum bzw. vom Inneren der Kristallisationswalze kann entweder kontinuierlich oder schubweise erfolgen.

Eine vorteilhafte Weiterbildung der erfindungsgemäßen Vorrichtung ist dadurch ausgezeichnet, daß der Zulauf der wärmeaufnehmenden Trägerflüssigkeit innerhalb der Kristallisationswalze einen Bohrungen aufweisenden, verschlossenen Endbereich und der entsprechende Ablauf ein in die in der Kristallisationswalze vorhandene Flüssigkeit eintauchendes Schöpfende besitzt.

Eine weitere, vorteilhafte Weiterbildung der erfindungsgemäßen Vorrichtung ist dadurch ausgezeichnet, daß der Wärmetauscher über dem Flüssigkeitsspiegel des geschmolzenen Speichermediums angeordnet ist.

Eine wiederum andere vorteilhafte Weiterbildung der erfindungsgemäßen Vorrichtung ist dadurch ausgezeichnet, daß der Wärmetauscher vollständig in das geschmolzene Speichermedium eingetaucht ist.

Der Erfindungsgegenstand wird im folgenden anhand eines Ausführungsbeispiels unter Bezugnahme auf die Zeichnungen näher erläutert. Es zeigt

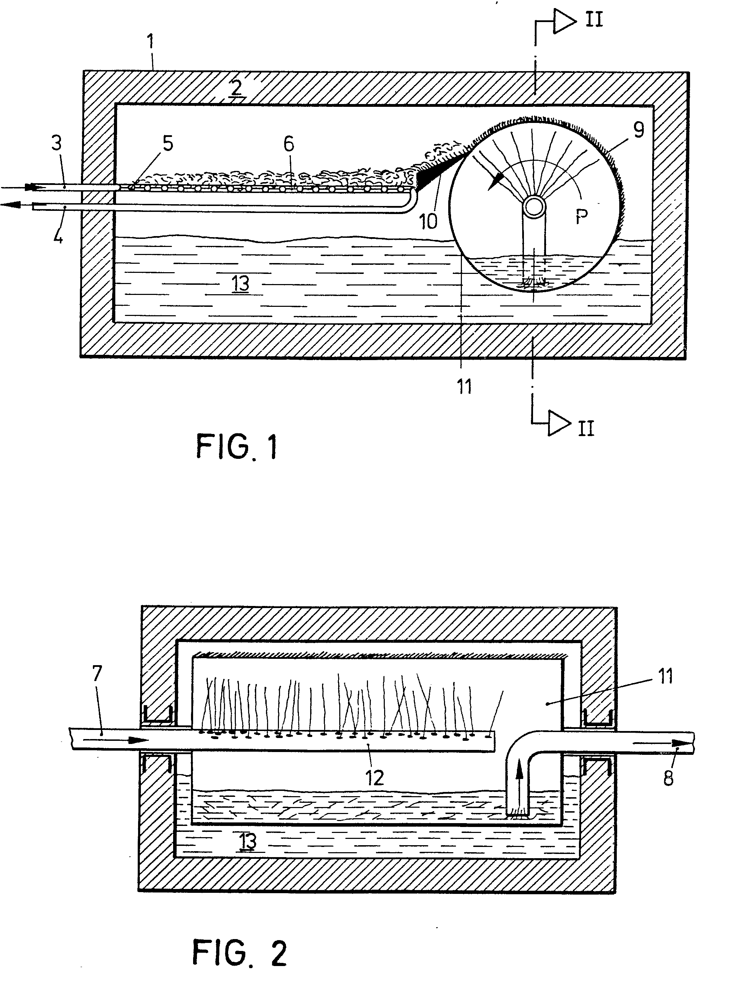

Fig. 1 einen Längsschnitt durch eine Vorrichtung zur Speicherung von Wärmeenergie mit Hilfe eines Schmelzwärmespeichers und

Fig. 2 einen Querschnitt durch die in Fig. 1 gezeigte Vorrichtung gemäß der Linie II-II.

Die Vorrichtung weist einen geschlossenen Behälter 1 auf, der außen mit einer Isolationsschicht 2 versehen ist. Für eine wärmeabgebende Trägerflüssigkeit sind Zu- und Ablaufleitungen 3, 4 vorgesehen, die durch die Behälterwand hindurchgeführt sind und in einem mit einem Rost versehenen Wärmetauscher 5 münden. Die wärmeabgebende Trägerflüssigkeit transportiert die zu speichernde Wärme in das Behälterinnere und schmilzt dort ein auf dem Wärmetauscherrost in fester Form abgelagertes Speichermedium 6. Das durch den Wärmetausch schmelzende Speichermedium speichert die abgegebene Wärme in Form von Schmelzwärme. Beim Schmelzen tropft das Speichermedium vom Rost ab und fällt in das Innere des Behälters, wo es in dem geschmolzenen Speichermedium 13 gesammelt wird, das den unteren Teil des Behälters einnimmt.

Im Inneren des Behälters ist eine Kristallisationswalze 11 vorhanden, die im vorliegenden Fall um eine waagerechte Drehachse derart angetrieben gelagert ist, daß die Walze teilweise mit ihrem Umfang in das geschmolzene Speichermedium 13 eintaucht. Bei einer bevorzugten Weiterbildung der Erfindung kann vorgesehen sein, daß die Walze nicht stationär, sondern in ihrer Höhe zur Oberfläche des geschmolzenen Speichermediums 13 variabel angeordnet ist.

In dem einen Achsstummel der Kristallisationswalze ist ein Zulauf 7 für eine wärmeaufnehmende Trägerflüssigkeit vorhanden, der im Inneren der Walze einen verschlossenen Endbereich 12 aufweist und mit Austrittsöffnungen für die Flüssigkeit versehen ist. Der andere Achsstummel der Drehachse wird von einer Ablaufleitung 8 der sekundären Trägerflüssigkeit durchsetzt. Die Ablaufleitung besitzt ein Schöpfende, mit Hilfe dessen im Inneren der Walze vorhandene wärmeaufnehmende Trägerflüssigkeit z. B. durch Pumpen zum Wärmeverbraucher gefördert werden kann.

Die im Inneren der Kristallisationswalze vorhandene wärmeaufnehmende Trägerflüssigkeit wird durch die Wärmeabgabe des geschmolzenen Speichermediums an der Wand der Walze erwärmt. Das Speichermedium kühlt sich damit unmittelbar am Außenmantel der Walze ab, wodurch es als angefrorene Kristallschicht 9 an der Walze haften bleibt. Je nach Eintauchtiefe und Drehgeschwindigkeit kann die Kristallschichtdicke verändert werden. Beim Drehen der Walze wird die Kristallschicht nach oben in Richtung des Pfeiles P, d. h. aus dem Bereich des geschmolzenen Speichermediums herausgefördert. Durch eine Abschabeinrichtung 10, in der Form eines schräg abwärts geneigten, tangential an der Walze anliegenden Spachtels, wird die angefrorene Schicht während des Drehens des Walzmantels gelöst und dem Rost des Wärmetauschers 5 zugeführt. Die so entstandenen Kristallschuppen werden auf dem Austauschrost gesammelt und liegen dort bereit, um die von der wärmeabgebenden Trägerflüssigkeit angelieferte Wärme durch den Schmelzvorgang wieder aufzunehmen. Hierdurch schließt sich der Zyklus.

Bei der vorliegenden Ausführungsform der Erfindung ist der Wärmetauscher 5 über dem Flüssigkeitsspiegel des Speichermediums angeordnet, und zwar so, daß der Rost auch noch oberhalb der Drehachse der Kristallisationswalze zu liegen kommt. Die Abschabeinrichtung bildet zwischen dem der Kristallisationswalze zugewandten Ende des Rostes und dem das gefrorene Speichermedium anfördernden Umfangsbereich der Walze eine zum Rost hin abfallende Führungsfläche. Der Wärmetauscher kann indes auch anders angeordnet werden. Je nach den Eigenschaften des Speichermediums könnte er auch als Rohrwärmetauscher ausgebildet und im Speichermedium eingetaucht angeordnet sein. In dem Fall müßte die Abschabeinrichtung als entsprechendes Bindeglied zwischen der Kristallisationswalze und dem Wärmetauscher in ihrer Stellung entsprechend angepaßt werden, um der Förderaufgabe noch gerecht zu werden.

## Patentansprüche

1. Verfahren zur Speicherung von Wärme, bei dem durch Zufuhr von Schmelzwärme ein gefrorenes Speichermedium (6) in den flüssigen Zustand (13) übergeführt und durch eine wärmeaufnehmende Trägerflüssigkeit nach Belieben Wärme abgeführt wird, indem die wärmeaufnehmende Trägerflüssigkeit in gewünschter Menge eine in das geschmolzene Speichermedium (13) eingetauchte Wärmeübertragungsvorrichtung (11) durchfließt und dabei das geschmolzene Speichermedium (13) an den Wänden der Wärmeübertragungsvorrichtung (11) erstarren läßt, dadurch gekennzeichnet, daß die Schmelzwärme von einer wärmeabgebenden Trägerflüssigkeit durch Wärmeübertragung dem gefrorenen Speichermedium (6) zugeführt wird, daß die Wärmeübertragungsvorrichtung eine an sich bekannte, zum Teil mit ihrem Umfang in das geschmolzene Speichermedium (13) eingetauchte, sich drehende, mit ihre Drehachse waagerecht angeordnete Kristallisationswalze (11) ist und daß das an den Wänden der Walze (11) gefrorene Speichermedium (6) durch die Drehbewegung der Walze der wärmeabgebenden Trägerflüssigkeit zugeführt wird.

2. Vorrichtung zur Durchführung des Verfahrens nach Anspruch 1 mit einem Behälter (1) zur Aufnahme eines Speichermediums, in dem eine in das Speichermedium (13) eingetauchte Wärmeübertragungsvorrichtung (11) angeordnet ist, welche einen Zulauf (7) und einen Ablauf (8) für die wärmeaufnehmende Trägerflüssigkeit aufweist und welcher eine Abschabeeinrichtung

(10) zugeordnet ist, durch die gefrorenes Speichermedium (6) von der Außenfläche der Wärmeübertragungsvorrichtung abtrennbar ist, dadurch gekennzeichnet, daß die die Wärmeübertragungsvorrichtung bildende, teilweise in das Speichermedium eintauchende Kristallisationswalze (11) um ihre waagerecht angeordnete Drehachse antreibbar in dem Behälter (1) gelagert ist, daß der Zulauf (7) und der Ablauf (8) für die wärmeaufnehmende Trägerflüssigkeit in das Innere der Kristallisationswalze (11) münden, daß für die wärmeabgebende Trägerflüssigkeit Zu- und Ablaufleitungen (3, 4) vorhanden sind, die zu einem im Behälter angeordneten Wärmetauscher (5) führen, der zur Aufnahme des von der Walze bei ihrer Drehung angelieferten, gefrorenen Speichermediums (6) geeignet ist, und dem die Abschabeeinrichtung (10) zum Überführen des von der Kristallisationswalze (11) angelieferten gefrorenen Speichermediums (6) vorgelagert ist.

3. Vorrichtung nach Anspruch 2, dadurch gekennzeichnet, daß der Zulauf (7) der wärmeaufnehmenden Trägerflüssigkeit innerhalb der Kristallisationswalze (11) einen Bohrungen aufweisenden, verschlossenen Endbereich (12) und der entsprechende Ablauf (8) ein in die in der Kristallisationswalze vorhandene Flüssigkeit eintauchendes Schöpfende besitzt.

4. Vorrichtung nach Anspruch 2 oder 3, dadurch gekennzeichnet, daß der Wärmetauscher (5) über dem Flüssigkeitsspiegel des geschmolzenen Speichermediums (13) angeordnet ist.

5. Vorrichtung nach Anspruch 2 oder 3, dadurch gekennzeichnet, daß der Wärmetauscher (5) vollständig in das geschmolzene Speichermedium (13) eingetaucht ist.

## Claims

1. Method for the storage of heat, in which by the supply of the heat of fusion a solidified storage medium (6) is converted into the liquid state (13) and heat is withdrawn at will by a heat-absorbing carrier fluid, in which the heat-absorbing carrier fluid in the desired quantity passes through a heat transfer device (11) immersed in the molten storage medium (13) and the molten storage medium (13) is permitted to solidify on the walls of the heat transfer device (11), characterised in this that the heat of fusion of a heat-releasing carrier fluid is supplied by heat transfer to the solidified storage medium (6), that the heat transfer device is a rotary crystallization drum (11) known per se with its rotational axis arranged horizontally, with at least a part of its periphery immersed in the molten storage medium (13), and that the storage medium (6) solidified on the walls of the roller (11) is carried by the rotational motion of the roller to the heat-releasing carrier fluid.

2. Apparatus for carrying out the method according to claim 1 with a container (1) for accommodating a storage medium, in which is mounted a heat transfer device (11) immersed in the storage medium (13), which has an inlet (7) and an outlet (8) for the heat-receiving carrier fluid and which is fitted with a scraper device (10), by which the solidified storage medium (6) is separable from the outer surface of the heat transfer device, characterised in this that the crystallization roller (11) partially immersed in the storage medium and which forms the heat transfer device is mounted drivably within the container (1) for rotation about its horizontal axis, that the inlet (7) and the outlet (8) for the heat-receiving carrier fluid open into the interior of the crystallization roller (11), that inlet and outlet pipes (3, 4) are provided for the heat-releasing carrier fluid, which lead to a heat-exchanger (5), mounted within the container, which is adapted to receive the solidified storage medium (6) released by rotation from the roller and which accomodates the scraper device (10) for the transfer of the solidified storage medium (6) released from the crystallization roller (11).

3. Apparatus according to claim 2, characterised in this that the inlet (7) of the heat-reveiving carrier fluid has within the crystallization roller (11) a closed off end zone (11) and is provided with bores and the corresponding outlet (8) has an end immersed in the fluid lying within the crystallization roller.

4. Apparatus according to claim 2 or 3, characterised in this that the heat-exchanger (5) is mounted above the fluid level of the molten storage medium (13).

5. Apparatus according to claim 2 or 3, characterised in this that the heat-exchanger (5) is fully immersed in the molten storage medium (13).

## Revendications

1. Procédé pour l'accumulation de chaleur, dans lequel un agent d'accumulation gelé (6) est réduit à l'état liquide (13) par introduction de chaleur de fusion, et dans lequel de la chaleur est évacuée à volonté par un liquide porteur captant la chaleur, auquel cas le liquide porteur captant la chaleur parcourt en quantité souhaitée un dispositif de transfert de chaleur (11) plongé dans l'agent d'accumulation fondu (13) et provoque alors la solidification dudit agent d'accumulation fondu (13) sur les parois dudit dispositif de transfert de chaleur (11), caractérisé par le fait que la chaleur de fusion est ajoutée par transfert de chaleur à l'agent d'accumulation gelé (6), par un liquide porteur cédant de la chaleur; par le fait que le dispositif de transfert de chaleur est un cylindre de cristallisation (11) connu en soi, plongé en partie par sa périphérie dans l'agent d'accumulation fondu (13) et monté rotatif, son axe de rotation étant situé horizontalement; et par le fait que l'agent d'accumulation (6) gelé sur les parois du cylindre (11) est amené vers le liquide porteur cédant de la chaleur par le mouvement rotatif dudit cylindre.

2. Dispositif pour la mise en oeuvre du procédé selon la revendication 1, avec un réservoir (1) recevant un agent d'accumulation, dans lequel est situé un dispositif de transfert de chaleur (11) qui, immergé dans l'agent d'accumulation (13), présente un raccord d'admission (7) et un raccord d'écoulement (8) du liquide porteur captant la chaleur, et auquel est associé un dispositif racleur (10) grâce auquel l'agent d'accumulation gelé (6) peut être détaché de la surface externe dudit dispositif de transfert de chaleur, caractérisé par le fait que le cylindre de cristallisation (11), constituant le dispositif de transfert de chaleur et partiellement immergé dans l'agent d'accumulation, peut être entraîné dans le réservoir (1) autour de son axe de rotation horizontal; par le fait que le raccord d'admission (7) et le raccord d'écoulement (8) du liquide porteur captant la chaleur débouchent à l'intérieur du cylindre de cristallisation (11); et par le fait qu'il est prévu des conduits d'admission et d'écoulement (3, 4) du liquide porteur cédant de la chaleur, ces conduits débouchant dans un échangeur de chaleur (5) qui, situé dans le réservoir, est approprié pour recueillir l'agent d'accumulation gelé (6) délivré par le cylindre lorsque ce dernier tourne, et en amont duquel se trouve le dispositif racleur (10) destiné à tranférer l'agent d'accumulation gelé (6) délivré par ledit cylindre de cristallisation (11).

3. Dispositif selon la revendication 2, caractérisé par le fait que le raccord d'admission (7) du liquide porteur captant la chaleur présente, à l'intérieur du cylindre de cristallisation (11), une région extrême fermée (12) percée de trous, le raccord d'écoulement (8) correspondant possédant une extrémité de prélèvement plongée dans le liquide renfermé par ledit cylindre de cristallisation.

4. Dispositif selon la revendication 2 ou 3, caractérisé par le fait que l'échangeur de chaleur (5) est disposé au-dessus du niveau du liquide de l'agent d'accumulation fondu (13).

5. Dispositif selon la revendication 2 ou 3, caractérisé par le fait que l'échangeur de chaleur (5) est entièrement immergé dans l'agent d'accumulation fondu (13).

FIG. 1

FIG. 2